# EUROPEAN PATENT APPLICATION

(11) **EP 1 401 224 A1**
(43) Date of publication of application: **24.03.2004**
(21) Application number: 02292265.2
(22) Date of filing: 17.09.2002
(51) Int. Cl.: H04Q 7/32, H04L 29/06

(54) **Software download to software definable radio by intermediate communication unit**

(71) Applicant: MOTOROLA, INC., Schaumburg, IL 60196 (US)
(72) Inventor: Buljore, Soodesh, 91440 Bures Sur Yvette (FR); Janneteau, Christophe, 78390 Bois D'arcy (FR); Bourse, Didier, 91120 Palaiseau (FR)
(74) Representative: Wharmby, Martin Angus

(57) **Abstract**

A method (200, 300) of downloading software to a software definable radio (105) includes the steps of determining (305) one or more configuration profile change(s), for example a service required by, or a location of, or an available network to, said software definable radio (105) and/or a software definable radio user profile and/or terminal profile. Software is downloaded (320, 340) to an intermediate communication unit, in response to the determination, which then re-configures the software definable radio (105). In particular, or in the alternative, the method may include determining (330) a number of communication links for downloading the software and selecting at least one of the links to be used to download (340) software to the software definable radio (105). A communication unit (120) and a distributed software definable radio re-configuration management mechanism are also described.

In this manner, an improved mechanism for software download is provided, whereby functionality of the software definable radio is placed in a personal radio assistance device. Furthermore, the user is provided with improved options in the download process.

## Description

### Field of the Invention

This invention relates, in general, to software or data download to adaptable subscriber equipment. The invention is applicable to, but not limited to, a software definable radio terminal for use with, for example, a next generation cellular communication system.

### Background of the Invention

In the next generations of mobile communication systems, mobile subscriber units will be able to access information sources, such as the Internet, directly using packet switched bearers across both an air-interface and via a wireline or optical communication network. Different types of subscriber communication units may be employed for this purpose, for example a mobile telephone or a personal digital assistant (PDA) with a wireless communication capability. Increasingly, mobile users are accessing the Internet via different types of fixed or wireless access networks, for example a cellular radio communication network, such as a Universal Mobile Telecommunication System (UMTS) network, a HiperLAN/2 or IEEE 802.11b local area network, a Bluetooth local communication system, or fixed accesses such as the Ethernet, and so on.

It is envisaged that services in the future will be decoupled from the communication network, implying that the roles of network operators, service providers and manufacturers can be clearly distinguished and supported independently by unrelated parties. In theory, therefore, download of either software applications or data content can be acquired from any accessible source.

A further recent development, which is expected to place increasing demands on transmission (i.e. bandwidth) resources of communication systems, is the concept of a software definable radio (SDR). In a software definable radio, a significant proportion of the functionality of the radio is provided in a form that can be reconfigured. This is achieved by means of providing configuration data/software, which when implemented in the SDR, provides that radio with alternative or additional functionality. This is to be distinguished from a radio apparatus in which a user is able to define a choice of functionality, the various functionalities however already being present in the apparatus. For example, a software definable radio might initially be configured to operate as a Time Division Multiple Access (TDMA) mobile telephone. However, the SDR would have circuitry and processing means able to receive configuration data that, when assimilated into the phone, provides the phone with a functionality or capability to be a Code Divisional Multiple Access (CDMA) telephone. In a multi-mode wireless communication environment, where diverse radio air interfaces (AIs) are available, the possibility of communicating via all or a majority of AIs can be realized using a Software Definable Radio (SDR) terminal.

Software download from a server hosted by a manufacturer or operator or service provider, etc. can, of course, be effected in a number of ways. One way includes the download of entire software applications (such as replacement of mobile specific firmware) and software patches that address specific technical faults that have been identified subsequent to an initial release of code. Software downloads may also be content specific in that they are accessed on a demand basis from a content provider and may therefore appear to be general Internet information, such as e-commerce messages, web pages, etc. Furthermore, it is known that software may be provided to a subscriber unit in the form of code on an adjunct "plug-in" memory expansion card or SIM card for use within subscriber equipment.

Currently in the military domain, SDR equipment and platforms (wireless information transfer system (WITS) in the USA and/or the multi-mode radio (MMR) demonstrator in Europe) exist in the form of "multi-mode and/or multi-band" terminals. In such communication units, almost all the different protocol stacks and "radio applications" (enhancing features, upgrades...) relating to the selectable AIs are either resident in the terminal or can be installed by direct uploading (from floppy or CD) or downloading over the air (OTA).

In the future, it is foreseen that the civilian SDR terminals, depending on their static and dynamic capabilities, will be capable of downloading the protocol stack software and its installation on a re-configurable architecture embedded within the terminal. In this regard, the download mechanism of such software (e.g. overall Air Interface protocol stack, baseband modules or any other radio applications) has been proposed to be carried out using over-the-air-programming (OTAP), via a common cellular wireless communication system [Anthony Van Den Heuvel et al. in US Patent no. US 6,223,030 B1].

The inventors of the present invention have appreciated the fact that this will significantly increase the amount of OTAP traffic with, for example, potentially hundreds of users downloading, available Radio Access Technology (RAT) protocol stacks and applications, terminal patches made available by manufacturers, enhanced software developed by service providers, etc. in a given location at any point in time. Moreover, this would also mean that the additional common cellular system should be installed in every location (i.e. complicated protocols and architectures within the radio access network should be installed), if any-where any-time software download functionality is to be provided, thus increasing cost and complexity in the network.

Even if only a few users were to download the air interface, the inventors have appreciated the inherent quality problem in using an OTA communication link. Such a link needs to be of a high enough quality and bandwidth to enable the software download to be achieved within a suitable period of time, without re-transmissions. In fact, air interface download should be preferably realised with a protocol ensuring reliability of the data content (e.g. using transport communication protocol (TCP)). This avoids installing corrupted software that may result in the risk of a "rogue" terminal, which, in turn, may cause damage to the network communications. Of course, if a poor quality OTA link is used, re-transmissions may be needed to ensure that the downloaded protocol can be relied upon. This, in turn, may result in an increased download time. Hence, an OTA air interface download can be very time and bandwidth consuming. In addition, the size of the "terminal" is expected to be quite bulky (e.g. WITS equipment), given the need to support substantial processing capabilities, memory, etc.

The patent application GB 2350749 Al discloses a mechanism for downloading a variety of multiple access scheme software to an SDR terminal via an intermediate device. Notably, the intermediate device comprises a modem, and therefore the download is performed using a wire-line mains or standard communication link to the server. The inventors of the present invention have recognised and appreciated a number of limitations with this approach, including speed, reliability and quality of the communication link.

Furthermore, the user needs to know in advance that (s)he will need a given specific reconfiguration software (e.g. CDMA) and to have advised the operator of the server in advance of his/her reconfiguration needs and corresponding data.

In addition, the inventors of the present invention have appreciated that the procedures, connections and notification (to the user, between the terminal and intermediate device) are very basic, i.e. without any 'intelligence'.

A need therefore arises for a mechanism, apparatus and associated methods to support efficient SDR application/software download to reduce OTA traffic, wherein the aforementioned problems are substantially alleviated.

### Statement of Invention

In accordance with a first aspect of the present invention, there is provided a method of downloading software to a software definable radio, as claimed in Claim 1.

In accordance with a second aspect of the present invention, there is provided a method of downloading software to a software definable radio, as claimed in Claim 2.

In accordance with a third aspect of the present invention, there is provided a software definable radio, as claimed in Claim 8.

In accordance with a fourth aspect of the present invention, there is provided a communication unit, as claimed in claim 9.

In accordance with a fifth aspect of the present invention, there is provided a communication unit, as claimed in Claim 10.

In accordance with a sixth aspect of the present invention, there is provided a storage medium storing processor-implementable instructions, as claimed in Claim 22.

In accordance with a seventh aspect of the present invention, there is provided a distributed software definable radio re-configuration management mechanism, as claimed in Claim 23.

In accordance with an eighth aspect of the present invention, there is provided a distributed software definable radio re-configuration management mechanism, as claimed in Claim 24.

In accordance with a ninth aspect of the present invention, there is provided a communication system, as claimed in Claim 25.

Further aspects of the present invention are as claimed in the dependent Claims.

In summary, the preferred embodiment of the present invention has provided a software download mechanism to re-configure a software definable radio based on a concept of an SDR configuration profile. The SDR configuration profile preferably includes one or more of the user's profile and/or terminal capabilities and/or location and/or a service and/or available network, requested by the user or provided automatically. In addition, an enhanced embodiment of the present invention enables the selection of a communication path for a more efficient download/upload service provision anywhere and anytime with a quality of service (QoS) to comply with the SDR user's needs at that time.

As one of many potential examples of the present invention, it is envisaged that, say, SDR software download may be more appropriately obtained via a radio local area network (R-LAN) or a universal mobile telecommunication system (UMTS), rather than a general packet radio system (GPRS), in a location where R-LAN and cellular coverage are available. In contrast, if in another location digital video broadcast transmission (DVB-T) is available in conjunction with WLANs, Cellular (e.g. UMTS, GPRS, etc.) based communications, it may be more appropriate to use DVB-T in the downlink and a cellular resource in the uplink, requesting the to-be-downloaded software. Furthermore, it is envisaged that the downloaded software may equally apply to regular traffic, i.e. traffic other than the software download.

### Brief Description of the Drawings

Exemplary embodiments of the present invention will now be described, with reference to the accompanying drawings, in which:
FIG. 1 illustrates a block diagram of a Personal Radio Assistant connectable to a Software definable radio (SDR) capable of being operably coupled to a communication Network, in accordance with a preferred embodiment of the present invention;
FIG. 2 is a flowchart illustrating controller functions for a request of a specific Air Interface (AI) from the SDR, in accordance with a preferred embodiment of the present invention;
FIG. 3 is a flowchart illustrating a process of configuring a SDR terminal based on information stored in a PRA or accessible from one or more communication networks over one or more selectable communication paths, in accordance with an enhanced embodiment of the present invention;
FIG. 4 is a flowchart that illustrates a preferred generic method of how the mapping database(s) and the software download databases are searched, in accordance with an enhanced embodiment of the present invention;
FIG. 5 illustrates a preferred example of a "SDR software storage" database; and
FIG. 6 illustrates a preferred example of a "configuration profile to SDR software" mapping database.

### Description of Preferred Embodiments

The preferred embodiment of the present invention introduces the concept of a communication and storage device that a user SDR terminal can be operably coupled to. This device, hereinafter referred to as a Personal Radio Assistant (PRA), advantageously facilitates software, application and/or features stored within, or to be downloaded to, the PRA and subsequently uploaded to (update) the SDR according to an SDR configuration profile. The SDR configuration profile preferably includes a user's, service, network, terminal and/or location profile. The PRA device preferably has a selectable connection to a number of remote information databases, for example the Internet, via ADSL/Modem, Ethernet or WLAN. In this manner, the PRA (or SDR user) selects the preferred communication link for the particular software to be downloaded.

Neither US Patent 6,223,030 B1 nor GB 2350749 address the opportunity, as recognised by the inventors of the present invention, of arranging for software downloads based on a configuration profile, for example, including a user's profile and/or a service requested by the user and/or a user location and/or network available.

Furthermore, there is no indication of a mapping database concept for mapping user, service, terminal, network and/or location profiles to SDR software required to be downloaded. Such mapping databases, located within the PRA and network, facilitate SDR configuration software to be downloaded to the SDR terminal for (re-)configuration. Moreover, there is no disclosure of the PRA associated controller, API and transport modules and mechanisms, as described herein.

The inventors of the present invention have appreciated that when the time constraint is critical for the itinerant user, who requires immediate installation of software to satisfy his/her current application, it is more and more probable that (re-)configuration of mobile terminals will be effected by the SDR configuration profile needs.

It is also envisaged by the inventors that such downloads should be made using any appropriate or available communication means, for example using wired or wireless local area network (WLAN) connections that are made available in the home or office, prior to the wireless itinerancy. In fact, it is further envisaged that the user should be able to some extent to plan his wireless trip, bringing with them their personal information sphere. Thus, the idea of using wired (ADSL, LAN, Ethernet, etc.) and WLAN connections (available in hotels, offices, home, etc.) is envisaged by the inventors of the present invention as the most appropriate, due to the ease of obtaining an Internet connection providing a relatively high bandwidth, good quality and low cost.

The preferred embodiment of the present invention also proposes the creation of a reconfiguration Manager to provide support for re-configuration of the SDR within the PRA. Notably, this reconfiguration Manager has negotiation capabilities with a corresponding reconfiguration manager located within the network of the communication system. This distributed reconfiguration manager concept is in contrast to known reconfiguration Managers that solely reside within the network.

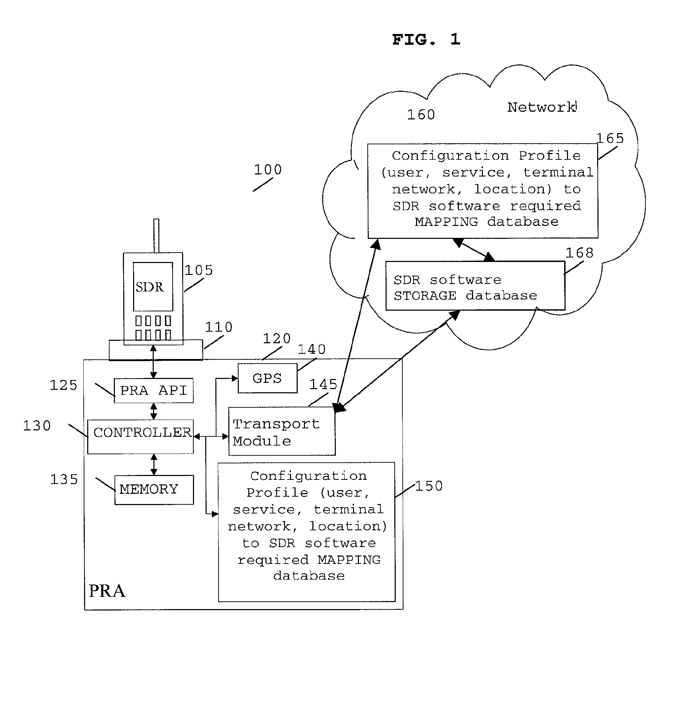

Referring now to FIG. 1, a block diagram 100 of a Personal Radio Assistant (PRA) 120 with a connectable Software Definable Radio (SDR) 105 connected to a Network 160 is illustrated, in accordance with the preferred embodiment of the present invention. The SDR 105 is operably coupled to the PRA 120 via a docking station 110. In alternative configurations, the SDR 105 may be operably coupled to the PRA 120 via a physical connector, an Infrared communication link, a bluetooth link, a serial connector, etc.

The PRA includes a PRA application-programming interface (API) 125 that enables the SDR 105 and PRA 120 to communicate with one another. The PRA API 125 effectively guarantees a reliable connection of the PRA 120 to the SDR terminal to facilitate any request/response from/to the SDR 105 to acquire new features/functions. As an example, it is envisaged that such features/functions include obtaining a user-profile configuration from the SDR 105, for example in response to the SDR 105 requesting a particular Air Interface protocol stack, a software module, etc.

In a preferred embodiment of the present invention, it is envisaged that the SDR 105 is able to configure the PRA 120. In this regard the SDR 105 user may provide the PRA 120 with information including:
(i) One or more SDR configuration profiles such as a user profile, service profile, terminal profile and/or network -profile,
(ii) Actual location information,
(iii) Parameters/features of the transport module or any other module of the PRA 120;
(iv) Requests for a new Air interface protocol stack, new or additional software applications, etc.
(v) Request that the PRA 120 re-configures the operational parameters of the SDR 105; and
(vi) A request that the SDR 105 be notified of an event occurring in the PRA, such as completion of a new download scheduled at a particular time; and
(vii) Scheduling of desired downloads indicating, say, a preferred day/time for the software download operation.

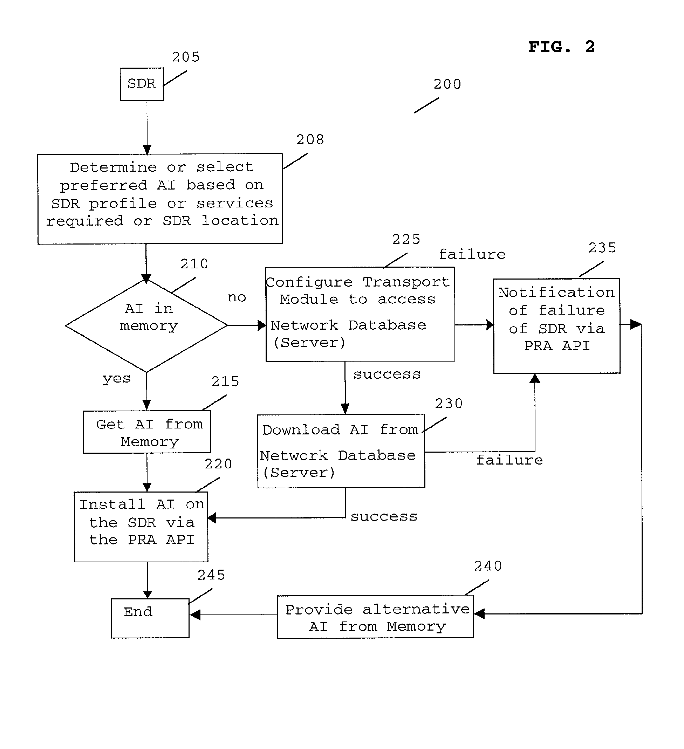

The PRA API 125 is operably coupled to a controller 130, which in this context is the intelligence of the PRA 120. In accordance with the preferred embodiment of the present invention, the functionality of the controller handles re-configuration scenarios based on the SDR configuration profile. In the context of the foregoing description, the expression 'configuration profile' may be assumed to encompass at least one or more of the following: an SDR user profile, SDR services, an SDR terminal location, an SDR terminal's capabilities and/or a network available in a particular location and at a particular time. In this context, the controller 130 controls the software downloading operation and updating of the databases and the memory. The controller 130 is also arranged to re-configure the SDR terminal at any pre-determined time, or when instructed by the SDR 105 or SDR user. The operation of the controller 130, in this context, is further described with reference to FIG. 2.

The controller 130 is operably coupled to a storage device 135. The storage device 135, for example, flash memory, random access memory (RAM) etc., preferably includes a resident set of re-configuration software features and/or functions. It is envisaged that the set of re-configuration software features and/or functions includes, for example, air interface protocol stacks 1 to N, software-based applications, enhancing features specific to a given air interface, etc.

In accordance with the preferred embodiment of the present invention, updating of data in the storage element 135, or re-configuring the control operations of the controller 130 may be implemented by any known mechanism. For example, a new controller or processor implementing processor-implementable instructions and/or stored on a suitable storage medium, such as computer memory, hard disk, floppy disk, ROM, PROM etc, may be used to implement the processes described. Alternatively, algorithms employed by the existing controller 130 and/or data contained in storage element 135 may be re-programmed via the transport module 145.

In accordance with the preferred embodiment of the present invention, it is envisaged that the software features and/or functions may be updated when the configuration profile is updated. For example, if a new air interface (AI) N+1 has been deployed at a given location, the AI re-configuration software may be downloaded and stored in the storage element 135, in preparation for updating the SDR 105. In this regard, storage element 135 may be seen as an extension of the SDR terminal's memory. Advantageously, this enables an SDR designer to decrease drastically the size of the SDR design and circumvent a number of realisation constraints, such as integration, cost, etc. of the SDR terminal 105.

The controller is also operably coupled to a transport module 145, which supports a number of wired or wireless connections to a number of core networks, one being shown for clarity purposes only. The core network 160 preferably includes a mapping database 165. The mapping database maps one or more configuration profiles, such as a user profile, a service profile, a network profile, a terminal profile or a location profile, to SDR software required for that profile. The core network 160 preferably also includes a SDR software storage database 168, for storing SDR software such as air interface software, an example of which will be described later.

In accordance with the preferred embodiment of the present invention, it is envisaged that the configuration profile mapping database 150 of the PRA 120 may become out of date, for example, due to the introduction of a new terminal or new radio access networks being made available. In this regard, the configuration profile mapping database 150 of the PRA 120 should be updated. This is performed in a similar manner to an SDR software update i.e. from the network server or compact disc (CD) or flash memory, etc., as described below with respect to FIG. 2.

Thus, up-to-date data and software are made available to the SDR terminal as the respective databases 150, 165, 168 are able to be synchronised. It is envisaged that the SDR software updates may be triggered by one or more events including:
(i) Automatic service discovery techniques, or
(ii) By the SDR user, when a new configuration profile mapping database is pulled to the PRA, or
(iii) By the network manager, when a new configuration profile mapping database is pushed by the network manager to the PRA.

Hence, for example, Radio Access Technology (RAT) mapping (based upon certain criteria) databases 150, 165, 168 (in the PRA 120 and/or the network 160) are used and synchronized based upon changes (in location, user preferences, terminal capabilities, network supported, services, etc) thereby providing an improved control of the frequency of download processes.

It is envisaged that the transport module 145 will support one or several network connection drivers for downloading or updating features and/or functions. Examples of protocol stacks that can be utilised by the transport module 145 include the TCP/IP (v4 or v6) suite including application protocols (e.g. hyper text transport protocol (HTTP), file transfer protocol (FTP), etc.), framing protocols (e.g. PPP...) and multiple access interface types (Ethernet, Land-line Modem, WLAN etc...). Advantageously, in accordance with the preferred embodiment, the update of the features and/or functions may be done under user control or may be programmable, say, for a particular time or day.

In particular, it is envisaged that the PRA 120, or the SDR user is provided with the option of selecting from several network communication links for downloading or updating features and/or functions stored in storage element 135. In this manner, the PRA 120 or SDR user is able to select the most appropriate download communication link for the particular situation. In the preferred embodiment of the present invention, this situation may be dictated by any configuration profile change.

In this enhanced embodiment, the PRA operation is extended to support download over multiple accesses, in contrast to performing the download consistently on the same common channel. In particular, an enhanced download access mechanism may be dynamically selected based on various parameters such as: user preferences, access availability QoS, cost, type of software to be downloaded, etc.

In accordance with the preferred embodiment of the present invention, the PRA 120 has the beneficial feature that the configuration profile database 150 is operably coupled to the transport module 145 and the controller 130. One preferred aspect of the configuration profile database is, for example, based on air-interface (AI) mapping. In this regard, upon a configuration profile change, a new AI may be determined by the SDR terminal, SDR user, PRA or the network, as being required by the SDR terminal for current or future operation. The determination is made based on the profile mapping. It is within the contemplation of the invention that any number of databases may be used in providing optimum air-interface (or other downloaded software) options to the SDR user.

Preferably, the databases 150 residing in the PRA 120 can access comparable databases 165, 168 in the core networks 160. In accordance with the preferred embodiment of the present invention, the configuration profile mapping database(s) 150 in PRA 120 may be realised based on some "optimum" criteria. A simple example is the mapping of a broadcast service in a downlink resource to a digital video broadcast transmission (DVB-T).

However, it is envisaged that more sophisticated criteria may be used for the mapping of, say, various available air interface protocols (1 to N) to different user and terminal profiles and/or services (1 to P) and/or locations stored on the respective database(s). Moreover, these local databases may be updated via the Internet (wired or wireless local area network (WLAN) connections) or by the user via the PRA API 125. It is envisaged that the location mapping database would be configured to provide (or request) the available air interface protocols at a given location, as determined by the PRA 120 or indicated by the user via a user interface on the SDR 105.

It is worth mentioning that such mapping databases are only preferable in the sense that the basic capabilities of the PRA (i.e. software such as AI download and storage) do not rely upon them. However, they are preferred elements that are used to provide advanced features (e.g. automatic AI download based on user, terminal profile and available radio access networks in a location) to the PRA 120. It is envisaged that the databases 150 may be either located local to the PRA 120 or accessed remotely via the PRA network connection.

In summary, the "mapping databases" 150, 165, located in the PRA 120 or in the network 160 or both, are used by the PRA 120 to discover whether new SDR software is required and whether such software needs to be downloaded from the network dependent upon a configuration profile change. The "SDR software storage database" 168, located in the network 160 and containing the software identified as missing in the SDR terminal by the mapping database, is accessed to download software.

It is envisaged that the above two types of database may be collocated. Hence, in general, the preferred process is to first identify a configuration profile change, followed by a determination of whether new SDR software is required using the first mapping database. Then a determination is made as to whether the new software is available locally or it is needed to be downloaded from a second software download database located in the communication network.

Finally, a positioning system 140, for example a global positioning system (GPS) module, is included in (or connected to) the PRA 120 to provide real-time location information. The preferred embodiment is to operably couple a GPS unit to the controller 130 within the PRA 120, to keep the number of external interfaces to a minimum.

In the following description, for the sake of simplicity, FIG. 2 illustrates a specific example of a SDR terminal or SDR user initiating a request for an AI download/update. However, it is within the contemplation of the invention that the methodology used in the AI download/update operation of FIG. 2 may be equally applicable to any other SDR software module or application.

The first scenario, as shown in FIG. 2, is the reconfiguration process of the SDR, via the PRA API. The re-configuration process preferably automatically follows an SDR request, or follows a determination by the PRA that a specific preferred Air interface (AI) protocol stack should be provided to the SDR, in step 208. In this regard, it is envisaged that the PRA is provided with the ability to proactively download and configure the SDR, once again through the PRA API, according to the configuration profile. If the PRA determines that the selected, or most appropriate, AI is stored in its storage element, in step 210, the AI software is retrieved, as shown in step 215. The AI software is then installed on the SDR via the PRA API, in step 220.

If the PRA determines that the selected, or most appropriate, AI is not already stored in its storage element, in step 210, the PRA controller configures the transport module to access the network database/server, as shown in step 225. If the selected, or most appropriate, AI is available from the accessed remote network, it is downloaded via a selected communication link, as shown in step 230. However, if the selected, or most appropriate, AI is not available a notification of failure message may be sent to the SDR via the PRA API, as shown in step 235. It is envisaged that the PRA may provide an alternative AI update to the SDR in this case, as shown in step 240. In this manner, the SDR is programmed with suitable AI software (if available) via the PRA API.

Furthermore, the download of the AI or required software modules may be at the initiative of the user, for example if the user knows in advance the changes that are required in the SDR's communication capabilities or configuration profile. It is envisaged that this is particularly advantageous to, say, a user that is planning to travel abroad. In this regard, for example, the user may receive by e-mail from a travel agency the required SW modules (to be stored in the user's PRA) to enable the SDR terminal to be used abroad, whilst at the same time receiving his/her electronic air ticket for the flight.

As described above, it is envisaged that the configuration profile may be entered by the user entering the information via, for example, an SDR keypad and/or a (touch sensitive) screen. It is also envisaged that a user-filtering mechanism may be used. In this regard, user profiles or likely service requirements of the user are analysed and, based on the user's communication 'habits' of the user, used to automatically generate the user, terminal profile and/or even estimate the SDR location.

In the above scenario, it is envisaged that the selection of appropriate software download information, for example AI information, may be different dependent upon the particular case. Two examples include:
(i) User-profile changes either through manual (by the user) or automatic triggering; and
(ii) Location changes entered manually by the user or through a GPS based triggering.

In the first case, the controller needs to handle the update of the re-configuration software of the SDR, due to an update of the user profile. In the second case the controller needs to handle the update of the reconfiguration of the SDR due to an update of the user's location, in response to an entry by the user or through a positioning device integrated in, or coupled to, the PRA. Thus, instead of the location information being provided by the user, a GPS unit would provide automatically the information in, for example, the form of "My location is now in area Y".

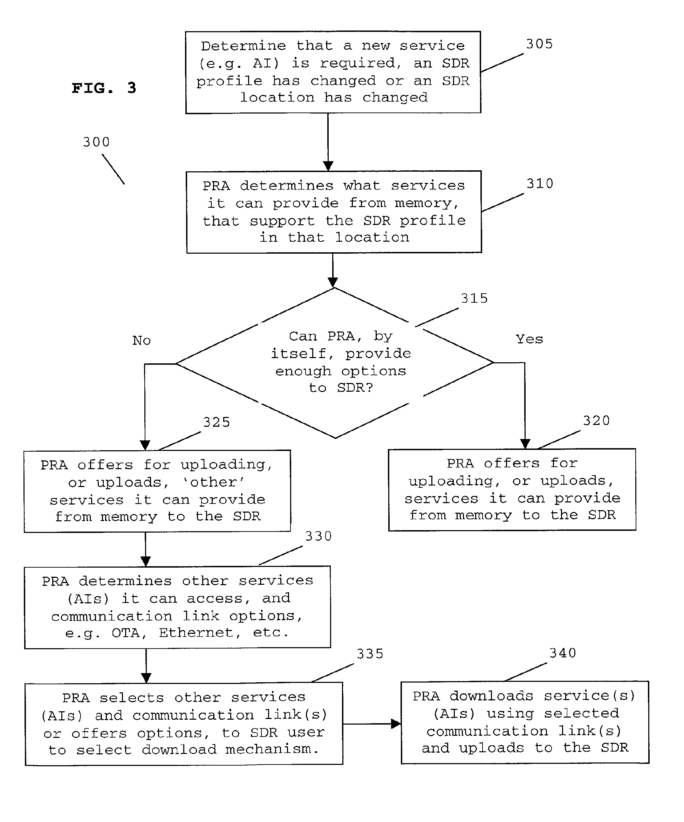

Referring now to FIG. 3, a flowchart 300 illustrates a process for providing an SDR terminal with a number of service options, and, if required, options for selecting the download mechanism and communication path, based on a configuration profile, in accordance with an enhanced embodiment of the present invention. When the SDR terminal or SDR user requires a new service, or the PRA determines that the configuration profile has changed and a different service or set of services may be offered/provided to the SDR terminal or SDR user, the PRA preferably determines the available service options in step 305. For example, the service may be an AI providing a higher data-rate to the SDR terminal, so that video streaming can be provided. The PRA then determines what service, or preferably services, can be provided from the PRA's memory, in step 310. The PRA then assesses whether the services or number of service options that it can provide to the SDR terminal/SDR user are sufficient, in step 315. If the available service(s) from the PRA's own memory storage are sufficient, in step 315, the service(s) are uploaded to the SDR terminal directly in step 320.

If the available service(s) from the PRA's memory are not sufficient, in step 315, any other service(s) that it can provide directly to the SDR terminal may then be uploaded to the SDR in step 325. The PRA then determines other services or software, for example AIs, that may be of use to the SDR terminal/SDR user. In accordance with an enhanced embodiment of the present invention, the PRA also determines the available communication links that can be used to download these services, in step 330. It is envisaged that the SDR user may be offered the ability to select the download mechanism. Advantageously, this enables the SDR user to make informed download decisions dependent upon speed of download, cost implications for using different links, reliability considerations to assess the likelihood of re-transmissions, etc.

Alternatively, the PRA selects the most appropriate download mechanism. For example, the PRA may decide (or offer) to use OTAP (if the potential risk of a poor quality communication link is not a problem), or an Ethernet connection (if a high-speed reliable link is preferable or required) or a wireless local area network (WLAN) (if the SDR terminal's location indicates that such a link may be available in that particular location), in step 335. In response to the SDR user selecting particular service(s) and/or download mechanisms, or the PRA itself selecting such options, the service(s) are downloaded using the selected communication link. These services are subsequently uploaded to the SDR terminal by the PRA, in step 340.

In particular, it is envisaged that as many SDR configuration profile characteristics as needed, such as a user-profile, an SDR user's requirements, an SDR terminal's capabilities, an SDR terminal location change, or available networks are used in determining the optimal service(s) to be provided to the SDR user. In an alternative embodiment, instead of providing a number of selectable services and/or selectable communication links, a single service may be selected to reduce, for example, the AI or set of AI or any other software that is to be downloaded.

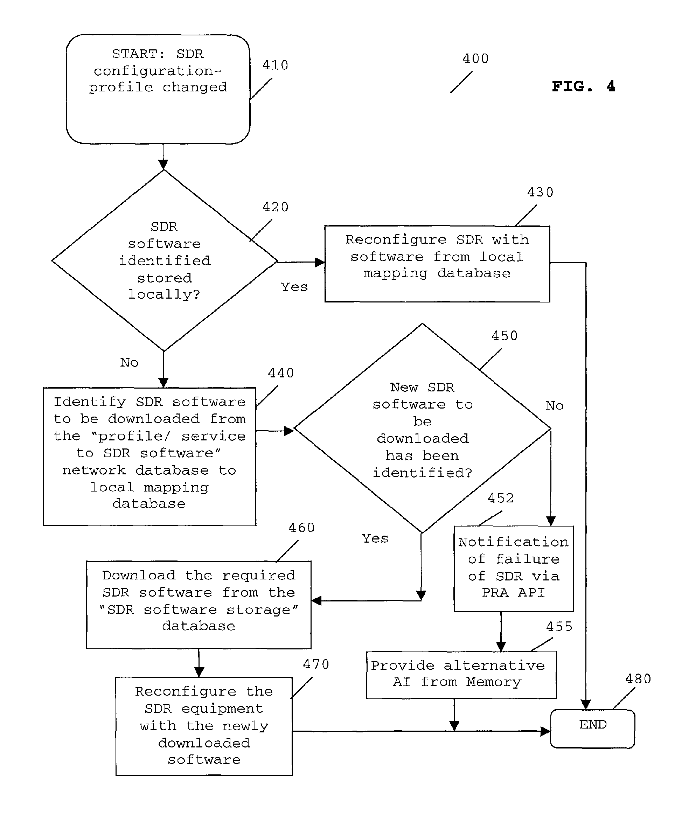

Referring now to FIG. 4, a flowchart 400 illustrates a preferred 'generic' method of how the mapping database(s) and the software download databases are searched in order to recover the to-be-downloaded software. Such a process is (preferably) automatically instigated following a trigger or determination of a configuration profile change in step 410. Upon such a configuration profile change, the PRA identifies appropriate software, applications or features, etc. that are or may be desired by the SDR. A determination is made by the PRA whether such desired software, applications or features, etc. are available in the local mapping database, in step 420. If such desired software, applications or features, etc. are available locally, the PRA reconfigures the SDR terminal's operation accordingly in step 430, and the process ends in step 480.

However, if the desired software, applications or features, etc. are not available locally within the PRA, the PRA may decide to search the network's "profile/service to SDR software" database and download the desired items from there to the SDR software storage database in the PRA, in step 440.

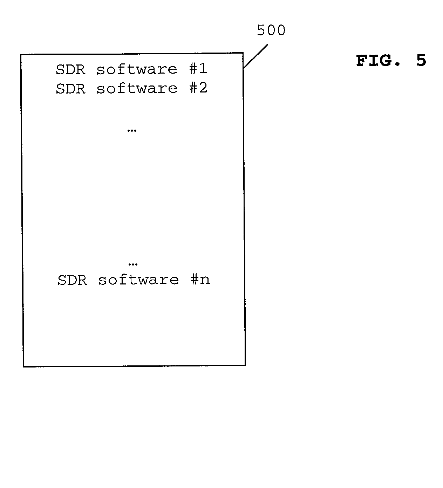

A simple example of a SDR software storage database is shown in FIG. 5.

If new SDR software has not been identified for downloading, in step 450, a "notification of failure" message is preferably sent to the SDR terminal via the PRA API, as shown in step 452. It is envisaged that the PRA may provide an alternative to the required SDR software in this case, as shown in step 455. In this manner, the SDR is programmed with less than optimal, but acceptable, software (if available) via the PRA API.

However, if new SDR software has been identified for downloading, in step 450, the download operation is performed as described above, in step 460. The download operation is preferably performed using the most appropriate communication link; given the SDR terminal circumstances and/or software download requirements prevalent at that time. Once the new software, applications or features, etc. have been downloaded to the PRA's database in step 460, the PRA reconfigures the operation of the SDR in step 470, and the process ends in step 480. In this manner, a PRA is able to determine whether a reconfiguration of the SDR terminal is required based on a configuration profile change, and reconfigure the operation of the SDR using locally stored or network stored software, applications or features, etc.

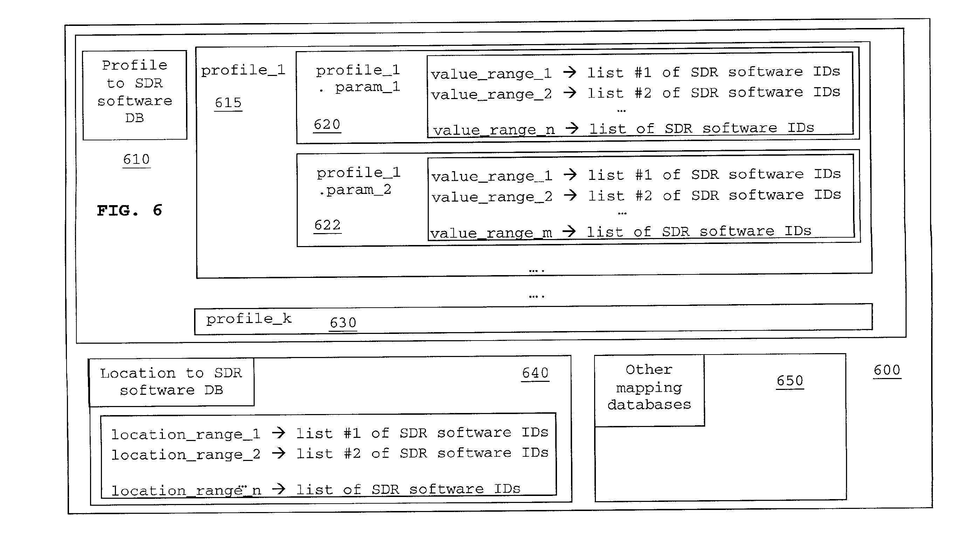

Referring now to FIG. 6, a preferred example of a "profile/service to SDR software mapping database 600 is illustrated. The database 600 is arranged such that preferred SDR software lists are contained in respective configuration profile sub-databases 610, 640, 650. For example, a list of SDR software IDs are linked to location ranges/areas of the SDR in a location to SDR software database 640. Hence, when the PRA determines that it is operating in location_range_1, it recognises that it has list #1 of preferred SDR software IDs stored locally. If the desired software is not found in the local database, the PRA is then able to search and download the desired software from the network in any suitable manner.

In an alternative embodiment, the local databases can be configured based on one or more SDR configuration profiles 615, 630, where each profile may dictate different operational parameters 620, 622 within the SDR terminal.

In summary, the preferred embodiment of the present invention has described a new concept device, hereinbefore termed a Personal Radio Assistant (PRA). A SDR terminal can be connected to the PRA and be reconfigured (AI protocol stack, services, applications, etc.) based on a configuration profile change, for example an SDR service request, on the user profile and/or an SDR terminal's location and/or the terminal's capabilities. Moreover, the PRA is provided with a number of high data rate and reliable communication links to acquire the selected services from any number of information sources such as the Internet.

The invention, or at least embodiments thereof, tend to provide the following advantages, either singly or in combination, by utilising the PRA device facilitating or performing one or more of the following functions:
(i) A software download is not necessarily required to be performed over-the-air (OTA), say, via a cellular network mechanism only or via a basic modem communication link only, thereby reducing wireless system (e.g. cellular) traffic and increasing flexibility and performance;
(ii) A higher bandwidth (i.e. faster download) and better reliability than OTA download may be dynamically selected;
(iii) Easy Internet connection to a number of remote database servers;
(iv) An improved flexible operation enabling downloads from substantially anywhere at anytime;
(v) Reduced size and power consumption of the SDR terminal;
(vi) Extended memory for the SDR terminal;
(vii) Advanced services provided by the PRA to enhance a user's software definable radio configuration management;
(viii) Scheduling of software downloads, off-line from the normal SDR usage, for example AI, downloads performed at night when network connection is cheaper;
(ix) Automatic AI or software download based on a user's request(s) and/or a user profile and/or a user location and/or an SDR terminal's capability and/or available network;
(x) The opportunity to use a standard communication link (Ethernet or equivalent) and gain the high speed, reliability, and quality of WLAN;
(xi) A controller is provided within the PRA to act as the "intelligence", thereby taking care of the database updates based on locations, user, services, location, and network profiles;
(xii) Radio Access Technology (RAT) mapping (based upon certain criteria) databases (in the PRA and network) are used and synchronized based upon changes (in location, user preferences, terminal capabilities, network supported, services, etc) thereby providing an improved control of the frequency of download processes; and
(xiii) On demand delivery of AI or software to SDR terminals upon request and automatic notification of download.

It is to be appreciated that the arrangement and specific details of the aforementioned software download mechanisms and options relating thereto etc. are merely examples, and the invention is not limited to these examples. The invention should be viewed as being capable of application to other aspects of data or software download as well as any type of SDR terminal, from any information database, other than the Internet. The invention should also be viewed as capable of being applied to many other types of data communication links, data networks or protocols and subnets thereof.

Whilst the specific and preferred implementations of the embodiments of the present invention are described above, it is clear that a skilled artisan could readily apply variations and modifications of such inventive concepts.

Thus, a mechanism, apparatus and associated methods to support improved software downloads, have been described, whereby the disadvantages associated with known mechanisms, apparatus and associated methods have been substantially alleviated.

## Claims

1. A method (200, 300) of downloading software to a software definable radio (105), the method **characterised by** the steps of:
determining (305) one or more configuration profile changes of said software definable radio (105);
downloading (320, 340) software to an intermediate communication unit, in response to said determination; and
re-configuring said software definable radio (105), by said intermediate communication unit (120).

2. A method (200, 300) of downloading software to a software definable radio, for example a method according to Claim 1, the method **characterised by** the steps of:
determining (330), by an intermediate communication unit (120), a number of communication links for downloading said software;
selecting at least one of said number of communication links;
downloading (340) software to an intermediate communication unit (120) in response to said step of selecting; and
re-configuring said software definable radio (105), by said intermediate communication unit (120), using said downloaded software.

3. The method (200, 300) of downloading software to a software definable radio (105) according to Claim 1 or Claim 2, wherein the method is further **characterised by** the steps of:
accessing a remote communication network (160) in order to provide the selected downloadable software; and
synchronising said software definable radio (105) to said remote communication network (160) in order to select and download software.

4. The method (200, 300) of downloading software to a software definable radio (105) according to any preceding Claim, wherein the method is further **characterised by** the step of:
providing a user of said software definable radio (105) and/or the intermediate communication unit (120) with the ability to select one or more communication links to download said software.

5. The method (200, 300) of downloading software to a software definable radio (105) according to any of preceding Claims 2 to 4, wherein said communication link operates in accordance with an IPv6 and/or IPv4 specification.

6. The method (200, 300) of downloading software to a software definable radio (105) according to any preceding Claim, wherein the method is further **characterised by** the preceding step of:
mapping, in response to said determination (305) of one or more configuration profile change(s), said change(s) to a locally stored database to provide reconfiguration software to said software definable radio (105).

7. The method (200, 300) of downloading software to a software definable radio (105) according to any preceding Claim, wherein said configuration profile change includes one or more of the following changes:
(i) A service required by said software definable radio (105),
(ii) A software definable radio user profile,
(iii) A location of said software definable radio (105),
(iv) Software Definable Radio terminal's capabilities, and/or
(v) Available networks to the Software Definable Radio.

8. A software definable radio (105) adapted to perform the steps according to any of preceding method Claims 1 to 7.

9. A communication unit (120) located between a software definable radio (150) and a network (160) that contains software to be downloaded to said software definable radio (105) the communication unit (120) adapted to perform the steps according to any of preceding method Claims 1 to 7.

10. A communication unit (120) located between a software definable radio (150) and one or more remote information databases (165) that contains software to be downloaded to said software definable radio (105), the communication unit **characterised by**:
one or more mapping databases (150) storing configuration profile mapping information of said software definable radio relating to one or more remote information databases (165);
a transport module (145), operably coupled to said one or more mapping databases (150) to facilitate communication between said communication unit (120) and said one or more remote information databases (165), and
a controller (130), operably coupled to said one or more mapping databases (150) and said transport module (145), to request and receive downloadable software to said communication unit (120) for forwarding to said software definable radio (105).

11. The communication unit (120) according to Claim 10, the communication unit further **characterised by** said transport module supporting several network communication links for downloading software features and/or functions to said software definable radio using one or more of said several network communication links.

12. The communication unit (120) according to Claim 10 or Claim 11, the communication unit further **characterised by** said transport module (145) supporting TCP/IP (v4 or v6) suite of application protocols.

13. The communication unit (120) according to Claim 11 or Claim 12, wherein said controller selects automatically said one or more communication links based on said configuration profile.

14. The communication unit (120) according to Claim 11 or Claim 12, wherein said controller is arranged to communicate communication link options to a user of said software definable radio to enable said user to select one or more of said several network communication links.

15. The communication unit (120) according to any of preceding Claims 10 to 14, wherein said controller is arranged to receive configuration profile information from a user of the software definable radio (105).

16. The communication unit (120) according to any of preceding Claims 10 to 15, wherein said controller (130) includes a filtering mechanism to generate a user profile based on determined operational requirements or habits of said user of said software definable radio (105).

17. The communication unit (120) according to any of preceding Claims 10 to 16, the communication unit (120) further **characterised by**:
an application programmable interface (125), operably coupled to said controller (130) and capable of operable coupling to said software definable radio (105), to upload software to said software definable radio (105) from said communication unit (120).

18. The communication unit (120) according to any of preceding Claims 10 to 17, the communication unit (120) further **characterised by** a first one of said databases (150) being a mapping database to enable said communication unit (120), in response to determining one or more configuration profile change(s), to map said one or more change(s) to a second locally stored database to provide reconfiguration software to said software definable radio (105).

19. The communication unit (120) according to any of preceding Claims 10 to 18, the communication unit (120) further **characterised by** said configuration profile change including one or more of the following changes:
(i) A service required by said software definable radio (105),
(ii) A software definable radio user profile,
(iii) A location of said software definable radio (105),
(iv) Software Definable Radio terminal's capabilities, and/or
(v) Available networks to the Software Definable Radio.

20. The method (200, 300) of downloading software to a software definable radio according to any of Claims 1 to 7 or a communication unit (120) according to any of Claims 10 to 19, wherein the software definable radio (105) configures an intermediate communication unit (120) with one or more of the following items of information:
(i) One or more SDR configuration profiles, for example a user, service, terminal and/or network profiles;
(ii) Location of said software definable radio;
(iii) Parameters or features of the transport module;
(iv) A request for a new air interface protocol stack, or new or additional software applications;
(v) A request that the communication unit (120) reconfigures one or more operational parameters of the software definable radio (105);
(vi) An ability to be notified of an event occurring in the communication unit; and
(vii) A time schedule for desired downloads.

21. The method (200, 300) of downloading software to a software definable radio according to any of Claims 1 to 7 or a communication unit (120) according to any of Claims 10 to 19, wherein the software downloaded by said software definable radio includes radio access technology capabilities, enhanced features or new services.

22. A storage medium (135) storing processor-implementable instructions for controlling a processor to carry out the method according to any of Claims 1 to 7.

23. A distributed software definable radio reconfiguration management mechanism according to the method steps of any of preceding Claims 1 to 7 or incorporating the communication unit according to any of preceding Claims 8 to 21.

24. A distributed software definable radio reconfiguration management mechanism comprising:
a software definable radio (105); and
a communication network (160) having a number of databases (165, 168) storing software applicable to said software definable radio (105);
wherein said distributed software definable radio reconfiguration management mechanism is **characterised by**
an intermediary device (120), operably coupled to said software definable radio and comprising memory (135) for storing software required by said software definable radio (105), for example obtained from said network (160), such that said software required by said software definable radio is distributed between said intermediary device and said one or more remote information databases (165, 168) in said communication network (160).

25. A communication system comprising a communication unit according to any of preceding Claims 8 to 21 or adapted to facilitate the steps of any of method Claims 1 to 7.

## Amended claims

### Amended claims in accordance with Rule 86(2) EPC.

1. A method (200, 300) of downloading software to a software definable radio (105), the method **characterised by** the steps of:
determining (305) one or more configuration profile changes of said software definable radio (105);
downloading (320, 340) software automatically to an intermediate communication unit, in response to said determination; and
re-configuring said software definable radio (105), by said intermediate communication unit (120),
wherein said configuration profile change is based on a change to one or more of the following:
(i) A service required by said software definable radio (105),
(ii) A software definable radio user profile,
(iii) A location of said software definable radio (105),
(iv) Software Definable Radio terminal's capabilities, and/or
(v) Available networks to the Software Definable Radio.

2. A method (200, 300) of downloading software to a software definable radio according to Claim 1, the method further **characterised by** the steps of:
determining (330), by an intermediate communication unit (120), a number of communication links for downloading said software;
selecting at least one of said number of communication links;
downloading (340) software to an intermediate communication unit (120) in response to said step of selecting; and
re-configuring said software definable radio (105), by said intermediate communication unit (120), using said downloaded software.

3. The method (200, 300) of downloading software to a software definable radio (105) according to Claim 1 or Claim 2, wherein the method is further **characterised by** the steps of:
accessing a remote communication network (160) in order to provide the selected downloadable software; and
synchronising said software definable radio (105) to said remote communication network (160) in order to select and download software.

4. The method (200, 300) of downloading software to a software definable radio (105) according to Claim 1 or Claim 2, wherein the method is further **characterised by** the step of:
providing a user of said software definable radio (105) and/or the intermediate communication unit (120) with the ability to select one or more communication links to download said software.

5. The method (200, 300) of downloading software to a software definable radio (105) according to Claim 1 or Claim 2, wherein said communication link operates in accordance with an IPv6 and/or IPv4 specification.

6. The method (200, 300) of downloading software to a software definable radio (105) according to Claim 1 or Claim 2, wherein the method is further **characterised by** the preceding step of:
mapping, in response to said determination (305) of one or more configuration profile change(s), said change(s) to a locally stored database to provide reconfiguration software to said software definable radio (105).

7. A software definable radio (105) adapted to perform the steps according to Claim 1.

8. A communication unit (120) located between a software definable radio (150) and a network (160) that contains software to be automatically downloaded to said software definable radio (105) the communication unit (120) adapted to perform the steps according to Claim 1.

9. A communication unit (120) located between a software definable radio (150) and one or more remote information databases (165) that contains software to be downloaded to said software definable radio (105), the communication unit **characterised by**:
one or more mapping databases (150) storing configuration profile mapping information of said software definable radio relating to one or more remote information databases (165);
a transport module (145), operably coupled to said one or more mapping databases (150) to facilitate communication between said communication unit (120) and said one or more remote information databases (165), and
a controller (130), operably coupled to said one or more mapping databases (150) and said transport module (145), to automatically request and receive downloadable software to said communication unit (120) for forwarding to said software definable radio (105).

10. The communication unit (120) according to Claim 9, the communication unit further **characterised by** said transport module supporting several network communication links for downloading software features and/or functions to said software definable radio using one or more of said several network communication links.

11. The communication unit (120) according to Claim 9 or Claim 10, the communication unit further **characterised by** said transport module (145) supporting TCP/IP (v4 or v6) suite of application protocols.

12. The communication unit (120) according to Claim 10, wherein said controller selects automatically said one or more communication links based on said configuration profile change.

13. The communication unit (120) according to Claim 10, wherein said controller is arranged to communicate communication link options to a user of said software definable radio to enable said user to select one or more of said several network communication links.

14. The communication unit (120) according to Claim 9 or Claim 10, wherein said controller is arranged to receive configuration profile information from a user of the software definable radio (105).

15. The communication unit (120) according to Claim 9 or Claim 10, wherein said controller (130) includes a filtering mechanism to generate a user profile based on determined operational requirements or habits of said user of said software definable radio (105).

16. The communication unit (120) according to Claim 9 or Claim 10, the communication unit (120) further **characterised by**:
an application programmable interface (125), operably coupled to said controller (130) and capable of operable coupling to said software definable radio (105), to upload software to said software definable radio (105) from said communication unit (120).

17. The communication unit (120) according to Claim 9 or Claim 10, the communication unit (120) further **characterised by** a first one of said databases (150) being a mapping database to enable said communication unit (120), in response to determining one or more configuration profile change(s), to map said one or more change(s) to a second locally stored database to provide reconfiguration software to said software definable radio (105).

18. The communication unit (120) according to Claim 9 or Claim 10, the communication unit (120) further **characterised by** said configuration profile change including one or more of the following changes:
(i) A service required by said software definable radio (105),
(ii) A software definable radio user profile,
(iii) A location of said software definable radio (105),
(iv) Software Definable Radio terminal's capabilities, and/or
(v) Available networks to the Software Definable Radio.

19. The method (200, 300) of downloading software to a software definable radio according to Claim 1 or a communication unit (120) according to Claim 9 or Claim 10, wherein the software definable radio (105) configures an intermediate communication unit (120) with one or more of the following items of information:
(i) One or more SDR configuration profiles, for example a user, service, terminal and/or network profiles;
(ii) Location of said software definable radio;
(iii) Parameters or features of the transport module;
(iv) A request for a new air interface protocol stack, or new or additional software applications;
(v) A request that the communication unit (120) reconfigures one or more operational parameters of the software definable radio (105);
(vi) An ability to be notified of an event occurring in the communication unit; and
(vii) A time schedule for desired downloads.

20. The method (200, 300) of downloading software to a software definable radio according to Claim 1 or a communication unit (120) according to Claim 9 or Claim 10, wherein the software downloaded by said software definable radio includes radio access technology capabilities, enhanced features or new services.

21. A storage medium (135) storing processor-implementable instructions for controlling a processor to carry out the method according to Claim 1.

22. A distributed software definable radio reconfiguration management mechanism according to the method steps of Claim 1 or incorporating the communication unit according to Claim 9 or Claim 10.

23. A distributed software definable radio reconfiguration management mechanism comprising:
a software definable radio (105); and
a communication network (160) having a number of databases (165, 168) storing software applicable to said software definable radio (105);
wherein said distributed software definable radio reconfiguration management mechanism is **characterised by**:
an intermediary device (120), operably coupled to said software definable radio and comprising memory (135) for storing software required by said software definable radio (105), for example obtained from said network (160), such that said software required by said software definable radio is distributed between said intermediary device and said one or more remote information databases (165, 168) in said communication network (160).

24. A communication system comprising a communication unit according to Claim 9 or Claim 10 or adapted to facilitate the steps of Claim 1.
